# EUROPÄISCHE PATENTSCHRIFT

(11) **EP 1 213 174 B1**
(45) Veröffentlichungstag und Bekanntmachung des Hinweises auf die Patenterteilung: **31.05.2006**
(21) Anmeldenummer: 01128053.4
(22) Anmeldetag: 26.11.2001
(51) Int. Cl.: B60W 10/06, B60W 10/10

(54) **Drehzahlregeleinrichtung und Verfahren zur Regelung einer Abtriebsdrehzahl eines hydrostatischen Antriebs**
Rotational speed control device and method of controlling an output rotational speed of a hydrostatic drive
Dispositif de réglage d'une vitesse de rotation et méthode pour régler une vitesse de rotation de sortie d'une entraînement hydrostatique

(30) Priorität: 08.12.2000 DE 10061154
(43) Veröffentlichungstag der Anmeldung: 12.06.2002
(73) Patentinhaber: Brueninghaus Hydromatik GmbH, 89275 Elchingen (DE)
(72) Erfinder: Krummenöhler, Uwe, 77815 Bühl (DE); Wanner, Robert, 89079 Ulm (DE)
(74) Vertreter: Körfer, Thomas

(56) Entgegenhaltungen:
- EP-A- 0 063 177
- EP-A- 0 622 263
- DE-A- 3 323 694
- DE-A- 3 926 718
- DE-A- 4 111 921
- US-A- 4 663 713
- US-A- 5 214 916
- US-A- 5 525 043
- US-A- 5 768 810

## Beschreibung

Die Erfindung geht aus von einer Drehzahlregeleinrichtung nach der Gattung des Anspruchs 1 und einem Verfahren nach der Gättung der Anspruchs 9, wie sie ans der EP-A-0 063 177 bekannt sind.

Eine Einrichtung zur Regelung einer Drehzahl eines Hydromotors ist z.B. aus der DE 34 21 958 C2 bekannt. Dabei soll eine zwischen Null und einer Maximaldrehzahl einstellbare Drehzahl konstant gehalten werden. Das hydrostatische Getriebe wird von einem Antriebsmotor angetrieben, der gleichzeitig als Fahrantrieb eingesetzt wird. Auf der Eingangsseite kommt es daher zu Drehzahlschwankungen, die durch die Regeleinrichtung ausgeglichen werden. Das Konstanthalten des von einer in beide Richtungen betreibbaren Pumpe geförderten Volumenstroms erfolgt durch ein hydraulisches Zweikreisregelventil. Zur Verstellung der Pumpengeometrie wird ein Hilfskreislauf genutzt, der durch eine ebenfalls mit dem Antriebsmotor angetriebene Hilfspumpe versorgt wird. Die Hilfspumpe fördert einen konstanten Volumenstrom und ist für den Betrieb in nur eine Drehrichtung eingerichtet.

Durch eine variable Drossel in der Hauptleitung wird die gewünschte Drehzahl eingestellt und dem mit Federn vorgespannten Regelventil eine Ausgangsstellung vorgegeben. Durch eine Veränderung der Drehzahl des Antriebsmotors wird das Regelventil durch die Änderung der Druckverhältnisse an der Drosselstelle aus der Ausgangsstellung ausgelenkt. Durch die Auslenkung des Regelventils kommt es in dem von der Hilfspumpe gespeisten Kreislauf zu einer Änderung der Druckverhältnisse. Die Druckdifferenz wird genutzt, um eine Verstelleinrichtung zu betätigen, die den geförderten Volumenstrom der variablen Pumpe einstellt, um trotz der veränderten Drehzahl des Antriebsmotors eine konstante Drehzahl des hydraulischen Motors zu erzeugen.

Ein Verfahren, bei dem ein Drehzahlsollwert des Antriebsmotors zwischen der Nenndrehzahl und der oberen Leerlaufdrehzahl des Antriebsmotors gewählt wird, ist in der DE 39 11 706 C2 offenbart. Durch die mechanische Verstellung eines Drehzahlstellhebels an einer Einspritzpumpe eines Dieselmotors wird dabei die Leistungsabgabe des Dieselmotors und damit die mögliche Leistungsaufnahme des hydraulischen Getriebes geregelt. Das offenbarte Verfahren ist geeignet zur Regelung im Teillastbereich, da der Arbeitspunkt auf der Leerlaufabregelkennlinie liegt und daher eine Regelung im Bereich der Nennleistung des Antriebsmotors nicht möglich ist. Durch eine Drehzahlmitkopplung wird die Leerlaufabregelkennlinie flacher, wodurch die Genauigkeitsanforderungen an die Drehzahlkonstanz verringert werden und die Regelstrecke vergrößert wird. Durch den Betrieb oberhalb der Nenndrehzahl des Antriebsmotors ist eine Verringerung der Leistung mit einer Erhöhung der Drehzahl des Antriebsmotors verbunden.

Weiterhin sind Einrichtungen zur Grenzlastregelung bekannt, bei denen ein Antriebsmotor auf eine Solldrehzahl gebracht wird, meist die Nenndrehzahl. Der Drehzahlistwert des Antriebsmotors wird mit dem Drehzahlsollwert verglichen. Bei einem so festgestellten Drehzahlabfall des . Antriebsmotors wird die Leistungsaufnahme der hydrostatischen Antriebsgruppe verringert. Dieser Vorgang wird solange fortgesetzt, bis die von dem Antriebsmotor abgegebene Leistung zumindest gleich groß ist, wie die von der hydrostatischen Antriebsgruppe aufgenommene.

Von Nachteil bei den bekannten Verfahren ist die unabhängige Regelung einer Motordrehzahl eines hydrostatischen Getriebes und der Drehzahl und damit der abgegebenen Leistung des Antriebsmotors. Die aus der DE 196 23 794 A1 bekannte Einrichtung nimmt keinen Einfluß auf die Drehzahl des Antriebsmotors. Dadurch kann bei nicht ausreichender Leistung des Antriebsmotors die eingestellte Drehzahl des Motors nicht erreicht werden.

Weiterhin ist der fertigungstechnische Aufwand, der zum Bau des offenbarten Regelventils erforderlich ist, sehr groß und damit das Gesamtsystem teuer. Für eine Anpassung des Ventils an neue Einsatzzwecke ist eine Neuauslegung erforderlich. Einerseits sind dadurch lange Entwicklungszeiten nötig, andererseits steigen die Kosten. Weitere Kosten und Bauaufwand entstehen durch den hydraulischen Hilfskreis, der über eine Hilfspumpe versorgt werden muß.

Nachteilig an dem in der DE 39 11 706 C2 offenbarten Verfahren ist die Beschränkung der Regelung des Antriebsmotors auf seiner Leerlaufabregelkennlinie. Durch den Verzicht auf die Regelung der hydraulischen Aggregategruppe selbst ist eine Regelung einer konstanten Drehzahl des hydraulischen Motors nicht möglich. Ferner ist keine- Regelung bei Vollast möglich, da im Bereich der Leerlaufabregelkennlinie lediglich eine Regelung im Teillastbereich durchführbar ist.

Für den Einsatz in einem Fahrzeug, bei dem der Antriebsmotor gleichzeitig für den Fahrantrieb genutzt wird, ist ein solches ausschließlich über die Drehzahl des Antriebsmotors geregeltes System nicht einsetzbar.

Die Lärmbelästigung, die durch den Betrieb eines Antriebsmotors oberhalb seiner Nenndrehzahl entsteht, ist ein zusätzlicher Nachteil.

Die erfindungsgemäße Drehzahlregeleinrichtung und das erfindungsgemäße Verfahren gemäß den Ansprüchen 1 und 9 haben die Aufgabe eine Regelung einer beliebig vorgewählten Abtriebsdrehzahl eines Hydromotors eines hydrostatischen Antriebs zu ermöglichen und gleichzeitig eine Drehzahl für einen Antriebsmotor des hydrostatischen Antriebs vorzugeben, welche an die erforderliche Leistung angepaßt ist.

Gegenüber den in dem Stand der Technik offenbarten Einrichtungen und Verfahren hat die Erfindung den Vorteil, daß sowohl eine Konstanthaltung der Drehzahl des Motors als auch eine Anpassung der Leistungsabgabe des Antriebsmotors durch eine einzige Eingabe vorgenommen wird. Für den Bediener hat dies weiterhin den Vorteil, daß der Bedienaufwand auf eine Minimum beschränkt ist. Die Zusammenfassung verschiedener Funktionen schließt Fehlbedienungen aus und kann so eventuellen Schaden von dem Arbeitsgerät oder auch Risiken bei der Bedienung abwenden.

Gemäß den in den Unteransprüchen aufgeführten Maßnahmen sind vorteilhafte Weiterbildungen der erfindungsgemäßen Drehzahlregeleinrichtung und des Verfahrens möglich.

Die Regelung des Antriebsmotors und des Übersetzungsverhältnisses des hydrostatischen Antriebs ermöglicht einen hinsichtlich des Wirkungsgrads optimierten Betrieb der Kombination aus Antriebsmotor und hydrostatischem Antrieb und darüber hinaus einen verbrauchsoptimierten Betrieb. Zur Ermittlung eines für den Betriebszustand des Gesamtsystems optimalen Betriebspunkts können durch die Kommunikation der Vorrichtungen und Steuereinheiten miteinander alle relevanten Daten einfach erfaßt werden

Durch die Anbindung der Drehzahlregeleinrichtung an ein Bussystem ist eine einfache Kommunikation zwischen den beteiligten Vorrichtungen möglich. Dies betrifft insbesondere die Kommunikation zwischen den elektronischen Steuereinheiten zur Steuerung des hydraulischen Antriebs und des Antriebsmotors.

Ein weiterer Vorteil liegt in der Möglichkeit, die in ein Bedienpult eingegebenen Daten über eine Funkverbindung zu den elektronischen Steuereinheiten zu übertragen. Durch den Einsatz eines mobilen Bedienpults reduziert sich gegenüber der Verwendung von mehreren Bedienpulten, die fest verdrahtet sind, der Aufwand zum Verlegen von Leitungen erheblich.

Durch die Möglichkeit, den Antriebsmotor für den hydrostatischen Antrieb von einem Bedienpult aus oder sogar automatisch zu starten und zu stoppen, ist die Bedienung weiter vereinfacht. Die vom Bediener erforderliche Eingabe beschränkt sich auf das Starten des Antriebsmotors, sowie die Wahl einer Abtriebsdrehrichtung und einer Abtriebsdrehzahl. Diese Funktionen können allesamt von dem Bedienpult aus vorgenommen werden.

Ebenso vorteilhaft ist die automatische Anpassung der Antriebsmotordrehzahl an eine veränderte Leistungsanforderung, z.B. durch die Wahl einer neuen Abtriebsdrehzahl des Hydromotors. Die unabhängige Vorwahl einer neuen Drehzahl für den Antriebsmotor entfällt. Umgekehrt wird bei einer Verringerung der Leistungsaufnahme des hydrostatischen Antriebs die Drehzahl des Antriebsmotors ebenfalls angepaßt, so daß eine unnötige Lärmbelastung und der Verbrauch von Brennstoff vermieden werden.

Für den Fahrbetrieb ist die Beschränkung der für den Antrieb des hydraulischen Getriebes verfügbaren freien Leistung von Vorteil. Für Bergauffahrt beispielsweise wird damit die mögliche maximale Leistungsaufnahme reduziert, um problemlosen Fahrtbetrieb gewährleisten zu können.

Ausführungsbeispiele der erfindungsgemäßen Drehzahlregeleinrichtung und des erfindungsgemäßen Verfahrens sind in der Zeichnung vereinfacht dargestellt und in der nachfolgenden Beschreibung näher erläutert. Es zeigen:
- Fig. 1: eine schematische Darstellung eines ersten Ausführungsbeispiels einer erfindungsgemäßen Drehzahlregeleinrichtung;
- Fig. 2: eine schematische Darstellung eines zweiten Ausführungsbeispiels einer erfindungsgemäßen Drehzahlregeleinrichtung und
- Fig. 3: eine schematische Darstellung eines zur Bedienung vorgesehenen Bedienpults.

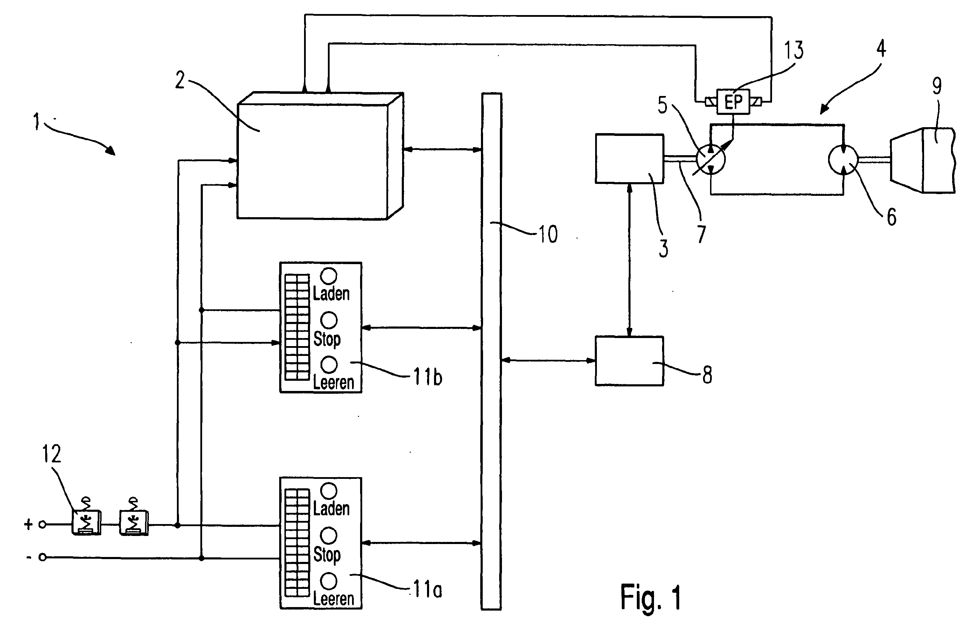

In Fig. 1 ist der Aufbau einer erfindungsgemäßen Drehzahlregeleinrichtung 1 dargestellt. Sie umfaßt eine erste elektronische Steuereinheit 2, die mit Bedienpulten 11a, 11b über ein Bussystem 10 Daten austauschen kann. Ebenfalls über das Bussystem 10 ist die Kommunikation zwischen der ersten elektronischen Steuereinheit 2 und einer zweiten elektronischen Steuereinheit 8 eines Antriebsmotors 3 möglich. Über eine Welle 7 ist ein hydrostatischer Antrieb 4 mit dem Antriebsmotor 3 kraftschlüssig verbunden.

Der hydrostatische Antrieb 4 besteht aus einer Hydropumpe 5 und einem Hydromotor 6, wobei im Ausführungsbeispiel das Verdrängungsvolumen der Hydropumpe 5 und deren Förderrichtung durch eine Verstellvorrichtung 13 einstellbar ist. Der Hydromotor 6 ist über eine Abtriebswelle z.B. mit einer Trommel 9 eines Betonmischfahrzeugs verbunden.

Zur Spannungsversorgung sind die Bedienpulte 11a, 11b und die erste elektronische Steuereinheit 2 an die Spannungsversorgung des Fahrzeugs angeschlossen. Über eines der Bedienpulte 11a, 11b wird eine gewünschte Abtriebsdrehrichtung und Abtriebsdrehzahl für den hydrostatischen Antrieb 4 eingegeben. Die vorgewählten Daten werden von dem entsprechenden Bedienpult 11a bzw. 11b an die erste elektronische Steuereinheit 2 weitergeleitet. Hierzu sind die Bedienpulte 11a, 11b an das Bussystem 10 angeschlossen. Die ebenfalls an das Bussystem 10 angeschlossene erste elektronische Steuereinheit 2 liest die Steuerbefehle ein und ermittelt anhand einer in einem Speicherbereich der ersten elektronischen Steuereinheit 2 gespeicherten Software eine Drehzahl für den Antriebsmotor 3. Die so festgelegte Drehzahl wird als Steuerbefehl über das Bussystem 10 an die zweite elektronische Steuereinheit 8 des Antriebsmotors 3 weitergegeben. Die erste elektronische Steuereinheit 2 kann auch als integriertes Bauteil in einem der Bedienpulte 11a, 11b ausgeführt sein. Die so ausgeführte Geräteeinheit kommuniziert dann über eine gemeinsame Anbindung via Bussystem 10 mit z.B. der zweiten elektronischen Steuereinheit 8.

Die zweite elektronische Steuereinheit 8 des Antriebsmotors 3 setzt den Steuerbefehl um, indem sie beispielsweise für einen Dieselmotor eine eingespritzte Brennstoffmenge und einen Einspritzzeitpunkt geeignet einstellt. Die so eingestellte Drehzahl des Antriebsmotors 3 wird über die Welle 7 auf die Hydropumpe 5 übertragen. Die Hydropumpe 5 wird mittels einer Stellvorrichtung 13 nach weiteren Steuerbefehlen eingestellt, die von der ersten elektronischen Steuereinheit 2 an die Stellvorrichtung 13 übermittelt werden. Durch die so festgelegte Fördermenge und Richtung des Hydraulikfluids wird der Hydromotor 6 mit der vorgewählten Abtriebsdrehzahl betrieben. Entsprechend dreht sich die Trommel 9 mit der durch den Bediener am Bedienpult 11a oder 11b vorgewählten Abtriebsdrehzahl.

Über das Bussystem 10 wird die Istdrehzahl des Antriebsmotors 3 an die erste elektronische Steuereinheit 2 zurückgemeldet. Bei Abweichungen der Istdrehzahl von der zunächst ermittelten Drehzahl, wird anhand der Vollastkennlinie ermittelt, ob die von der hydrostatischen Antriebsgruppe 4 abverlangte Leistung größer ist als die Leistung, die der Antriebsmotor 3 entsprechend der eingestellten Drehzahl abgeben kann. Bei zu geringer Leistungsabgabe des Antriebsmotors 3 verändert die erste elektronische Steuereinheit 2 die einzustellende Drehzahl des Antriebsmotors 3 in Richtung größerer Leistung entsprechend der Vollastkennlinie. Damit der Antriebsmotor 3 die neu ermittelte Drehzahl erreichen kann, wird die von dem hydrostatischen Antrieb aufgenommene Leistung durch eine entsprechende Betätigung der Stellvorrichtung 13 zunächst reduziert.

Nachdem der Antriebsmotor 3 die neu ermittelte Drehzahl erreicht hat, wird die Hydropumpe 5 durch die Stellvorrichtung 13 wieder auf das zum Erreichen der eingestellten Abtriebsdrehzahl erforderliche Übersetzungsverhältnis eingestellt. Die Drehzahl des Hydromotors 6 sowie der Trommel 9 wird so eingehalten. In festgelegten Wiederholzyklen wird der Regelkreis neu durchlaufen, und so eine Abweichung der Istdrehzahl von der für den Antriebsmotor 3 ermittelten Drehzahl registriert und entsprechend den vorstehenden Ausführungen die Drehzahl des Antriebsmotors 3 eingestellt und das Übersetzungsverhältnis des hydrostatischen Antriebs 4 angepaßt.

Alternativ zu der Übermittlung eines Steuerbefehls, der den von der ersten elektronischen Steuereinheit 2 ermittelten Drehzahlwert enthält, an die zweite elektronische Steuereinheit 8 kann die Drehzahl auch von der zweiten elektronischen Steuereinheit 8 ermittelt werden. Diese kann beispielsweise aus der vorgewählten Abtriebsdrehzahl, die als Steuerbefehl von dem Bedienpult 11a oder 11b an die erste und die zweite elektronische Steuereinheit 2 und 8 übermittelt wird, anhand korrespondierender Tabellen, welche in der ersten und zweiten elektronischen Steuereinheit 2 und 8 abgelegt sind, ermittelt werden.

Die beschriebene Regelung der Drehzahl des Antriebsmotors 3 wird für den Fahrbetrieb des Betonmischers ausgesetzt. Zur Erkennung kann hierbei z.B. die Position einer. Feststellbremse und ein eingelegter Leerlauf des Getriebes für den Fahrbetrieb genutzt werden. Bei eingelegter Feststellbremse und Leerlauf steht das Fahrzeug still und die Regelung der Drehzahl des Antriebsmotors 3 kann gefahrlos durch die erste und zweite elektronische Steuereinheit 2 und 8 erfolgen. Wird über das Bussystem 10 der ersten elektronischen Steuereinheit 2 übermittelt, daß entweder die Feststellbremse nicht eingelegt ist oder ein Gang eingelegt ist, so wird von der ersten elektronischen Steuereinheit 2 an die zweite elektronische Steuereinheit 8 des Antriebsmotors 3 kein Steuerbefehl übermittelt. Die Drehzahlregelung des Antriebsmotors 3 wird dann ausschließlich über das Fahrpedal des Fahrzeugs vorgenommen.

Wird bei abgeschaltetem Antriebsmotor 3 eine von Null verschiedene Drehzahl an einem der Bedienpulte 11a, 11b eingegeben, so kann der Antriebsmotor 3 von dem Bedienpult 11a oder 11b aus über einen Start-Stop-Taster 18 gestartet werden. Anschließend wird automatisch die durch die erste elektronische Steuereinheit 2 ermittelte Drehzahl des Antriebsmotors 3 durch die zweite elektronische Steuereinheit 8 eingestellt.

Umgekehrt ist ebenso ein Abschalten des Antriebsmotors 3 durch den Start-Stop-Taster 18 eines der Bedienpulte 11a, 11b möglich, wenn die eingestellte Drehzahl auf Null verändert wird. Wird der Antriebsmotor 3 nicht gleichzeitig für den Fahrbetrieb benötigt, so wird von dem Bedienpult 11a oder 11b aus das Signal zum Stoppen der Brennstoffzufuhr über das Bussystem 10 an die zweite elektronische Steuereinheit 8 des Antriebsmotors 3 übermittelt. Von der zweiten elektronischen Steuereinheit 8 wird der Antriebsmotors 3 dann letztlich abgestellt.

Denkbar ist ebenso eine automatische Start-Stop-Schaltung bei Vorwahl einer Drehzahl an dem Bedienpult 11a, 11b durch die erste und zweite elektronische Steuereinheit 2 und 8.

Als Sicherheitseinrichtung sind mehrere Not-Aus-Taster 12 vorgesehen, welche an verschiedenen Positionen des Fahrzeugs, vorzugsweise in der Nähe der Bedienpulte 11a, 11b, angeordnet sind.

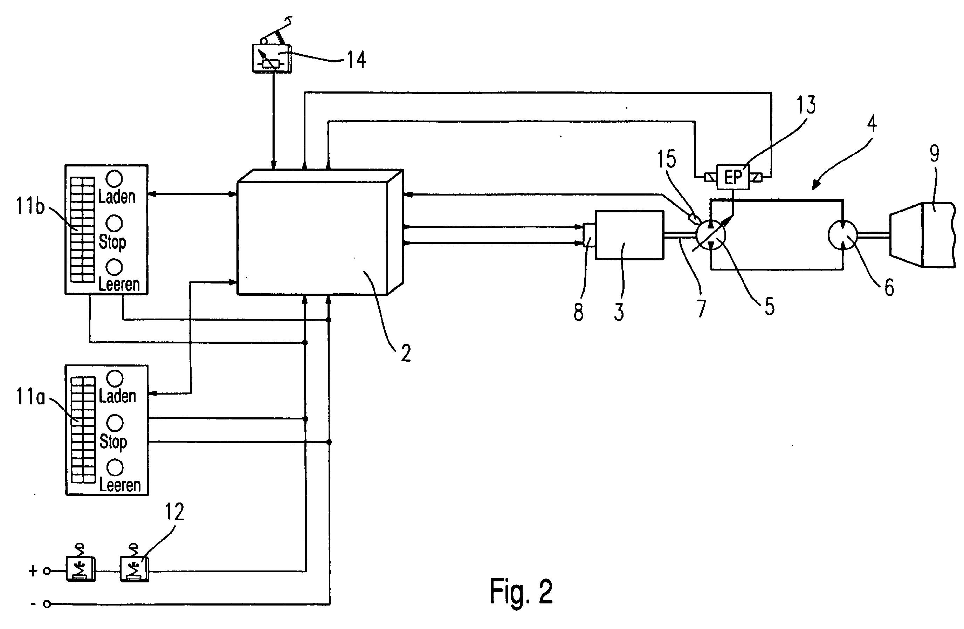

In Fig. 2 ist ein zweites Ausführungsbeispiel einer erfindungsgemäßen Drehzahlregeleinrichtung 1 dargestellt. Anstelle des Bussystems 10 kommunizieren die benötigten Einrichtungen direkt miteinander, bei ansonsten vergleichbarem Aufbau des Antriebsmotors 3 und des daran angeschlossenen hydrostatischen Antriebs 4. Hierzu sind die Bedienpulte 11a, 11b direkt mit der ersten elektronischen Steuereinheit 2 durch elektrische Leitungen verbunden. Ebenso ist über direkte elektrische Leitungen der Informationsfluß zwischen der ersten elektronischen Steuereinheit 2 und der zweiten elektronischen Steuereinheit 8 des Antriebsmotors 3 möglich.

Die Istdrehzahl wird von einem Drehzahlgeber 15 an die erste elektronische Steuereinheit 2 ebenso wie die Position der Feststellbremse 14 übermittelt. Die Funktionsweise der Drehzahlregelung ist identisch mit der des ersten Ausführungsbeispiels. Da die Antriebswelle 7 für eine drehzahlrichtige Anbindung des Antriebsmotors 3 an die Hydropumpe 5 sorgt, kann die Information über die Istdrehzahl auch direkt von dem Antriebsmotor 3 gewonnen werden, so daß ein eigener Drehzahlgeber 15 an dem Hydromotor 5 entfällt.

Zur weiteren Vereinfachung der Bedienung kann die Leitung zwischen den Bedienpulten 11a, 11b und der ersten elektronischen Steuereinheit 2 entfallen. Statt dessen erfolgt die Übermittlung der Steuerbefehle von den Bedienpulten 11a und 11b durch eine Funkverbindung, wodurch die Flexibilität in der Bedienung weiter erhöht wird.

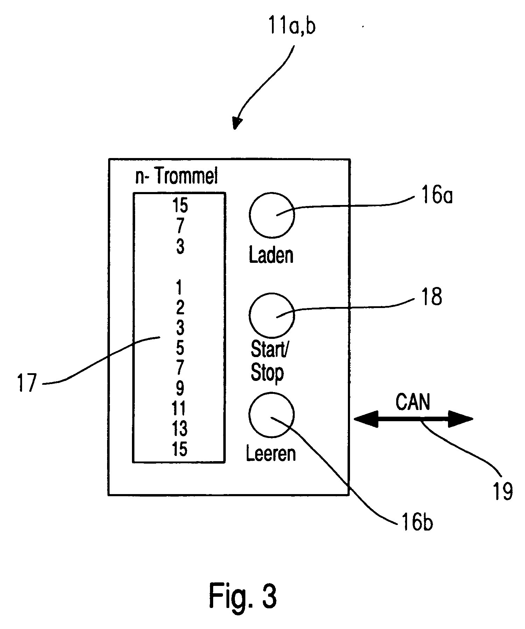

Ein Ausführungsbeispiel eines Bedienpults 11a zum Betrieb in einem CAN-Bus als Bussystem 10 ist in Fig. 3 dargestellt. Über zwei Drehregler 16a und 16b wird die Abtriebsdrehzahl und die Abtriebsdrehrichtung des hydrostatischen Antriebs vorgegeben. Dabei ist über den Drehregler 16a die Abtriebsdrehrichtung und Abtriebsdrehzahl für Funktion "Laden" vorzuwählen, durch den Drehregler 16b die Abtriebsdrehzahl für die entgegengesetzte Abtriebsdrehrichtung für die Funktion "Leeren". Die eingestellte Abtriebsdrehrichtung und Abtriebsdrehzahl läßt sich in einem Anzeigenfeld 17 ablesen. Durch eine Start-Stop-Taste 18 kann der Antriebsmotor 3 von dem Bedienpult 11a oder 11b aus gestartet bzw. gestoppt werden.

## Patentansprüche

1. Eine Drehzahlregeleinrichtung für einen hydrostatischen Antrieb (4) insbesondere für eine Trommel (9) eines Betonmischers, bestehend aus einer Hydropumpe (5), die durch einen Antriebsmotor (3) veränderlicher Drehzahl antreibbar ist, einem Hydromotor (6) und einer Verstellvorrichtung (13) zum Verstellen des Verdrängungsvolumens der Hydropumpe (5) und/oder des Hydromotors (6), wobei eine Abtriebsdrehrichtung und eine Abtriebsdrehzahl für den Hydromotor (6) von zumindest einem von einer elektronischen Steuereinheit (2, 8) getrennten Bedienpult (11a, 11b) aus eingebbar sind,
**dadurch gekennzeichnet,**
**daß** die Verstellvorrichtung (13) durch eine erste elektronische Steuereinheit (2) und der Antriebsmotor (3) durch eine zweite elektronische Steuereinheit (8) regelbar sind und
**daß** bei nicht eingelegter Feststellbremse und/oder bei eingelegtem Gang kein Steuerbefehl an die zweite elektronische Steuereinheit (8) übertragbar ist.

2. Drehzahlregeleinrichtung nach Anspruch 1,
**dadurch gekennzeichnet,**
**daß** durch das Bedienpult (11a, 11b) an eine erste und eine zweite elektronische Steuereinheit (2, 8) erste Steuerbefehle übertragbar sind, die die gewünschte Abtriebsdrehzahl und die Abtriebsdrehrichtung des Hydromotors (6) vorgeben,
**daß** durch die zweite elektronische Steuereinheit (8) die Drehzahl des Antriebsmotors (3) so einstellbar ist, daß sich für die gewählte Abtriebsdrehzahl des Hydromotors (6) der größte Wirkungsgrad und/oder der kleinste Energieverbrauch des Antriebsmotors (3) ergibt und daß durch die erste elektronische Steuereinheit (2) die Verstellvorrichtung (13) so ansteuerbar ist, daß durch das Übersetzungsverhältnis des aus der Hydropumpe (5) und dem Hydromotor (6) gebildeten hydrostatischen Antriebs (4) die Drehzahl des Antriebsmotors (3) auf die gewünschte Abtriebsdrehzahl des Hydromotors (6) transformierbar ist.

3. Drehzahlregeleinrichtung nach Anspruch 1,
**dadurch gekennzeichnet,**
**daß** durch das Bedienpult (11a, 11b) an die erste elektronische Steuereinheit (2) erste Steuerbefehle übertragbar sind, die die gewünschte Abtriebsdrehzahl und die Abtriebsdrehrichtung des Hydromotors (6) vorgeben,
**daß** durch die erste elektronische Steuereinheit (2) zweite Steuerbefehle, die eine Drehzahl für den Antriebsmotors (3) vorgeben, an die zweite elektronische Steuereinheit (8) übermittelbar sind, die für die gewählte Abtriebsdrehzahl des Hydromotors (6) den größten Wirkungsgrad und/oder den kleinsten Energieverbrauch des Antriebsmotors (3) ergibt und
**daß** die durch die erste elektronische Steuereinheit (2) vorgegebene Drehzahl des Antriebsmotors (3) durch die zweite elektronische Steuereinheit (8) einstellbar ist und
**daß** durch die erste elektronische Steuereinheit (2) die Verstellvorrichtung (13) so ansteuerbar ist, daß durch das Übersetzungsverhältnis des aus der Hydropumpe (5) und dem Hydromotor (6) gebildeten hydrostatischen Antriebs (4) die Drehzahl des Antriebsmotors (3), auf die gewünschte Abtriebsdrehzahl des Hydromotors (6) transformierbar ist.

4. Drehzahlregeleinrichtung nach Anspruch 1 bis 3,
**dadurch gekennzeichnet,**
**daß** die erste und zweite elektronische Steuereinheit (2, 8) und die Verstellvorrichtung (13) durch ein Bussystem (10) miteinander verbunden sind.

5. Drehzahlregeleinrichtung nach Anspruch 4,
**dadurch gekennzeichnet,**
**daß** das zumindest eine Bedienpult (11a, 11b) durch das Bussystem (10) mit der ersten und der zweiten elektronischen Steuereinheit (2, 8) verbunden ist.

6. Drehzahlregeleinrichtung nach Anspruch 2 oder 3,
**dadurch gekennzeichnet,**
**daß** die Steuerbefehle von dem zumindest einen Bedienpult (11a, 11b) durch Funk übertragbar sind.

7. Drehzahlregeleinrichtung nach einem der Ansprüche 1 bis 6,
**dadurch gekennzeichnet,**
**daß** der Antriebsmotor (3) von dem zumindest einen Bedienpult (11a, 11b) aus startbar ist.

8. Drehzahlregeleinrichtung nach einem der Ansprüche 1 bis 7,
**dadurch gekennzeichnet,**
**daß** der Antriebsmotor (3) von dem zumindest einen Bedienpult (11a, 11b) aus abstellbar ist.

9. Verfahren zur Regelung einer Drehzahl eines hydrostatischen Antriebs (4), bestehend aus einer Hydropumpe (5) die durch einen Antriebsmotor (3) veränderlicher Drehzahl angetrieben wird, einem Hydromotor (6) und einer Verstellvorrichtung (13) zum Verstellen eines Verdrängungsvolumens der Hydropumpe (5) und/oder des Hydromotors (6),
mit folgenden Verfahrensschritten:
- Eingabe der Abtriebsdrehrichtung und der Abtriebsdrehzahl für den Hydromotor (6) an einem Bedienpult (11a, 11b),
- Ermittlung einer Drehzahl für den Antriebsmotor (3), so daß sich für die gewählte Abtriebsdrehzahl des Hydromotors (6) der größte Wirkungsgrad und/oder der kleinste Energieverbrauch des Antriebsmotors (3) ergibt,
- Ansteuern des Antriebsmotors (3) entsprechend der ermittelten Drehzahl und
- Ansteuern der Verstellvorrichtung (13) des hydraulischen Antriebs (4) zum Einstellen eines zum Transformieren der Drehzahl des Antriebsmotors (3) auf die gewählte Abtriebsdrehzahl des Hydromotors (6) erforderlichen Verdrängungsvolumens der Hydropumpe (5) und/oder des Hydromotors (6),
**dadurch gekennzeichnet,**
**daß** ein Steuerbefehl nur bei nicht eingelegtem Gang und eingelegter Feststellbremse an eine den Antriebsmotor (3) regelnde elektronische Steuereinheit (8) übertragen wird.

10. Verfahren zur Regelung einer Drehzahl eines hydrostatischen Antriebs nach Anspruch 9,
**dadurch gekennzeichnet,**
**daß** die Abtriebsdrehzahl und die Abtriebsdrehrichtung von dem Bedienpult (11a, 11b) an eine erste und eine zweite elektronische Steuereinheit (2, 8) übermittelt werden und die zweite elektronische Steuereinheit (8) die Drehzahl für den Antriebsmotor (3) ermittelt.

11. Verfahren zur Regelung einer Drehzahl eines hydrostatischen Antriebs nach Anspruch 9,
**dadurch gekennzeichnet,**
**daß** die Abtriebsdrehzahl und die Abtriebsdrehrichtung von einem Bedienpult (11a, 11b) an die erste Steuereinheit (2) übermittelt werden, die eine Drehzahl für den Antriebsmotor (3) ermittelt und diese an die zweite elektronische Steuereinheit (8) übermittelt.

12. Verfahren zur Regelung einer Drehzahl eines hydrostatischen Antriebs nach einem der Ansprüche 9 bis 11,
**dadurch gekennzeichnet,**
**daß** die Istdrehzahl des Antriebsmotors (3) mit der ermittelten Drehzahl für den Antriebsmotor (3) verglichen wird und bei einer Abweichung eine neue Drehzahl ermittelt und eingestellt wird, die der Leistungsabgabe des Antriebsmotors (3) und der Leistungsaufnahme des hydrostatischen Antriebs (4) angepaßt ist.

13. Verfahren zur Regelung einer Drehzahl eines hydrostatischen Antriebs nach einem der Ansprüche 9 bis 12,
**dadurch gekennzeichnet,**
**daß** bei abgeschaltetem Antriebsmotor (3) und Eingabe einer von Null verschiedenen Drehzahl für den hydrostatischen Antrieb (4) der Antriebsmotor (3) automatisch gestartet wird.

14. Verfahren zur Regelung einer Drehzahl eines hydrostatischen Antriebs nach einem der Ansprüche 9 bis 13,
**dadurch gekennzeichnet,**
**daß** bei laufenden Antriebsmotor (3) und Eingabe der Drehzahl Null für den hydrostatischen Antrieb (4) der Antriebsmotor (3) automatisch abgeschaltet wird, sofern der Antriebsmotor nicht gleichzeitig für den Fahrbetrieb genutzt wird.

15. Verfahren zur Regelung einer Drehzahl eines hydrostatischen Antriebs nach einem der Ansprüche 9 bis 14,
**dadurch gekennzeichnet,**
**daß** bei gleichzeitiger Nutzung des Antriebsmotors (3) für den Fahrbetrieb die durch den hydrostatischen Antrieb (4) aufgenommene Leistung auf die durch den Fahrbetrieb nicht benötigte Leistung des Antriebsmotors (3) begrenzt wird.

16. Verfahren zur Regelung einer Drehzahl eines hydrostatischen Antriebs nach einem der Ansprüche 9 bis 15,
**dadurch gekennzeichnet,**
**daß** die Regelung der Drehzahl des Antriebsmotors (3) bei gleichzeitige Nutzung des Antriebsmotors (3) für den Fahrbetrieb ausgesetzt wird.

## Claims

1. Speed regulation device for a hydrostatic drive (4), in particular for a drum (9) of a concrete mixer, comprising a hydraulic pump (5) which is driveable by a drive motor (3) of variable speed, a hydraulic motor (6) and an adjustment device (13) for adjusting the displacement volume of the hydraulic pump (5) and/or of the hydraulic motor (6), an output direction of rotation and an output speed for the hydraulic motor (6) being inputtable from an operating console (11a, 11b) separate from an electronic control unit (2, 8),
**characterised in that** the adjustment device (13) is controllable by a first electronic control unit (2) and the drive motor (3) is controllable by a second electronic control unit (8), and **in that** no control command can be transmitted to the second electronic control unit (8) when the immobilising brake is not engaged and/or when a gear is engaged.

2. Speed regulation device according to claim 1,
**characterised in that** first control commands which preset the desired output speed and output direction of rotation of the hydraulic motor (6) can be transmitted via the operating console (11a, 11b) to a first and a second electronic control unit (2, 8), **in that** the speed of the drive motor (3) is so adjustable by means of the second electronic control unit (8) that the highest efficiency and/or the lowest energy consumption of the drive motor (3) is/are yielded for the selected output speed and **in that** the adjustment device (13) is so controllable by means of the first electronic control unit (2) that the speed of the drive motor (3) is transformable to the desired output speed of the hydraulic motor (6) by means of the transmission ratio of the hydrostatic drive (4) formed by the hydraulic pump (5) and the hydraulic motor (6).

3. Speed regulation device according to claim 1,
**characterised in that** first control commands which preset the desired output speed and output direction of rotation of the hydraulic motor (6) can be transmitted to the first electronic control unit (2) via the operating console (11a, 11b), **in that** second control commands which preset a speed for the drive motor (3) can be transmitted by the first electronic control unit (2) to the second electronic control unit (8), which speed yields the highest efficiency and/or the lowest energy consumption of the drive motor (3) for the selected output speed of the hydraulic motor (6), **in that** the speed of the drive motor (3) preset by the first electronic control unit (2) is adjustable by the second electronic control unit (8) and **in that** the adjustment device (13) is so controllable by the first electronic control unit (2) that the speed of the drive motor (3) is transformable to the desired output speed of the hydraulic motor (6) by means of the transmission ratio of the hydrostatic drive (4) formed by the hydraulic pump (5) and the hydraulic motor (6).

4. Speed regulation device according to claims 1 to 3,
**characterised in that** the first and second electronic control units (2, 8) and the adjustment device (13) are connected to one another by a bus system (10).

5. Speed regulation device according to claim 4,
**characterised in that** the at least one operating console (11a, 11b) is connected by the bus system (10) to the first and second electronic control units (2, 8).

6. Speed regulation device according to claim 2 or 3,
**characterised in that** the control commands are transmittable from the at least one operating console (11a, 11b) by radio.

7. Speed regulation device according to any one of claims 1 to 6, **characterised in that** the drive motor (3) can be started from the at least one operating console (11a, 11b).

8. Speed regulation device according to any one of claims 1 to 7, **characterised in that** the drive motor (3) can be stopped from the at least one operating console (11a, 11b).

9. Method for regulating a speed of a hydrostatic drive (4) comprising a hydraulic pump (5) driven by a drive motor (3) of variable speed, a hydraulic motor (6) and an adjustment device (13) for adjusting a displacement volume of the hydraulic pump (5) and/or of the hydraulic motor (6), comprising the following process steps:
- inputting the output direction of rotation and the output speed for the hydraulic motor (6) at an operating console (11a, 11b),
- determining a speed for the drive motor (3) such that the highest efficiency and/or the lowest energy consumption of the drive motor (3) is/are yielded for the selected output speed of the hydraulic motor (6),
- controlling the drive motor (3) according to the speed thus determined, and
- controlling the adjustment device (13) of the hydraulic drive (4) so as to set a displacement volume of the hydraulic pump (5) and/or of the hydraulic motor (6) required for transforming the speed of the drive motor (3) to the selected output speed of the hydraulic motor (6),
**characterised in that** a control command is transmitted to an electronic control unit (8) regulating the drive motor (3) only when no gear is engaged and the immobilising brake is engaged.

10. Method for controlling a speed of a hydrostatic drive according to claim 9, **characterised in that** the output speed and the output direction of rotation are transmitted from the operating console (11a, 11b) to a first and a second electronic control unit (2, 8) and the second electronic control unit (8) determines the speed for the drive motor (3).

11. Method for regulating a speed of a hydrostatic drive according to claim 9, **characterised in that** the output speed and the output direction of rotation are transmitted from an operating console (11a, 11b) to the first control unit (2) which determines a speed for the drive motor (3) and transmits this speed to the second control unit (8).

12. Method for regulating a speed of a hydrostatic drive according to any one of claims 9 to 11, **characterised in that** the actual speed of the drive motor (3) is compared to the determined speed of the drive motor (3) and, in the event of a deviation, a new speed which is adapted to the power output of the drive motor (3) and to the power consumption of the hydrostatic drive (4) is determined and set.

13. Method for regulating a speed of a hydrostatic drive according to any one of claims 9 to 12, **characterised in that** when the drive motor is (3) switched off and a speed other than zero for the hydrostatic drive (4) is input, the drive motor (3) is automatically started.

14. Method for regulating a speed of a hydrostatic drive according to any one of claims 9 to 13, **characterised in that** when the drive motor (3) is running and the speed zero is input for the hydrostatic drive (4), the drive motor (3) is automatically switched off, provided the drive motor is not being used simultaneously for the propulsion mode.

15. Method for regulating a speed of a hydrostatic drive according to any one of claims 9 to 14, **characterised in that** when the drive motor (3) is used simultaneously for the propulsion mode the power consumed by the hydrostatic drive (4) is limited to the power of the drive motor (3) not required for the propulsion mode.

16. Method for regulating a speed of a hydrostatic drive according to any one of claims 9 to 15, **characterised in that** regulation of the speed of the drive motor (3) is discontinued when the drive motor (3) is used simultaneously for the propulsion mode.

## Revendications

1. Dispositif de réglage d'une vitesse de rotation d'un entraînement hydrostatique (4), en particulier pour un tambour (9) d'une bétonnière, constitué d'une pompe hydraulique (5), qui peut être entraînée par un moteur d'entraînement (5) à vitesse de rotation variable, d'un moteur hydraulique (6) et d'un dispositif de réglage (13) destiné à régler le volume de refoulement de la pompe hydraulique (5) et/ou du moteur hydraulique (6), une direction de rotation de sortie et une vitesse de rotation de sortie pour le moteur hydraulique (6) pouvant être entrées à partir d'au moins une console d'opérateur (11a, 11b) séparée d'une unité de commande électronique (2, 8),
**caractérisé en ce que**
le dispositif de réglage (13) peut être réglé par une première unité de commande électronique (2) et le moteur d'entraînement (3) par une seconde unité de commande électronique (8) et
**en ce que**, lorsque le frein d'arrêt n'est pas engagé et/ou qu'une vitesse est engagée, aucune instruction de commande ne peut être transmise à la seconde unité de commande électronique (8).

2. Dispositif de réglage d'une vitesse de rotation selon la revendication 1,
**caractérisé en ce que**
des premières instructions de commande, qui prédéterminent la vitesse de rotation de sortie souhaitée et la direction de rotation de sortie du moteur hydraulique (6), peuvent être transmises par la console d'opérateur (11a, 11b) à une première et une seconde unités de commande électronique (2, 8),
**en ce que** la vitesse de rotation du moteur d'entraînement (3) peut être réglée par la seconde unité de commande hydraulique (8), de sorte que cela produit pour la vitesse de rotation de sortie sélectionnée du moteur hydraulique (6) le plus grand rendement et/ou la plus petite consommation d'énergie du moteur d'entraînement (3) et **en ce que** le dispositif de réglage (13) peut être commandé par la première unité de commande électronique (2), de sorte que la vitesse de rotation du moteur d'entraînement (3) peut être transformée en vitesse de rotation de sortie souhaitée du moteur hydraulique (6) par le rapport de transmission de l'entraînement hydrostatique (4) formé à partir de la pompe hydraulique (5) et du moteur hydraulique (6).

3. Dispositif de réglage de la vitesse de rotation selon la revendication 1,
**caractérisé en ce que**
des premières instructions de commande, qui prédéterminent la vitesse de rotation de sortie souhaitée et la direction de rotation de sortie du moteur hydraulique (6), peuvent être transmises par la console d'opérateur (11a, 11b) à la première unité de commande électronique (2),
**en ce que** des secondes instructions de commande, qui prédéterminent une vitesse de rotation pour le moteur d'entraînement (3), peuvent être transmises par la première unité de commande électronique (2) à la seconde unité de commande électronique (8), qui produit pour la vitesse de rotation de sortie sélectionnée du moteur hydraulique (8) le plus grand rendement et/ou la plus petite consommation d'énergie du moteur d'entraînement (3) et
**en ce que** la vitesse de rotation du moteur d'entraînement (3) prédéterminée par la première unité de commande électronique (2) peut être réglée par la seconde unité de commande électronique (8) et **en ce que** le dispositif de réglage (13) peut être commandé par la première unité de commande électronique (2), de sorte que la vitesse de rotation du moteur d'entraînement (3) peut être transformée en vitesse de rotation de sortie souhaitée du moteur d'entraînement (6) par le rapport de transmission de l'entraînement hydrostatique (4) formé à partir de la pompe hydraulique (5) et du moteur hydraulique (6).

4. Dispositif de réglage de la vitesse de rotation selon l'une quelconque des revendications 1 à 3,
**caractérisé en ce que**
la première et la seconde unités de commande électronique (2, 8) et le dispositif de réglage (13) sont reliés les uns aux autres par un système de bus (10).

5. Dispositif de réglage de la vitesse de rotation selon la revendication 4,
**caractérisé en ce que**
la au moins une console d'opérateur (11a, 11b) est reliée par le système de bus (10) à la première et à la seconde unités de commande électronique (2, 8).

6. Dispositif de réglage de la vitesse de rotation selon la revendication 2 ou 3,
**caractérisé en ce que**
les instructions de commande peuvent être transmises par radio par la au moins une console d'opérateur (11a, 11b).

7. Dispositif de réglage de la vitesse de rotation selon l'une quelconque des revendications 1 à 6,
**caractérisé en ce que**
le moteur d'entraînement (3) peut être démarré à partir de la au moins une console d'opérateur (11a, 11b).

8. Dispositif de réglage de la vitesse de rotation selon l'une quelconque des revendications 1 à 7,
**caractérisé en ce que**
le moteur d'entraînement (3) peut être arrêté à partir de la au moins une console d'opérateur (11a, 11b).

9. Procédé de réglage d'une vitesse de rotation d'un entraînement hydrostatique (4), constitué d'une pompe hydraulique (5), qui est entraînée par un moteur d'entraînement (3) à vitesse de rotation variable, d'un moteur hydraulique (6) et d'un dispositif de réglage (13) destiné à régler un volume de refoulement de la pompe hydraulique (5) et/ou du moteur hydraulique (6),
comprenant les étapes de procédé suivantes :
- entrée de la direction de rotation de sortie et de la vitesse de rotation de sortie pour le moteur hydraulique (6) dans une console d'opérateur (11a, 11b),
- détermination d'une vitesse de rotation pour le moteur d'entraînement (3), de sorte que le plus grand rendement et/ou la plus petite consommation d'énergie du moteur d'entraînement (3) sont produits pour la vitesse de rotation de sortie sélectionnée,
- commande du moteur d'entraînement (3) en fonction de la vitesse de rotation déterminée et
- commande du dispositif de réglage (13) de l'entraînement hydraulique (4) pour régler un volume de refoulement de la pompe hydraulique (5) et/ou du moteur hydraulique (6) nécessaires pour transformer la vitesse de rotation du moteur d'entraînement (3) en vitesse de rotation de sortie sélectionnée du moteur hydraulique (6),
**caractérisé en ce que**
une instruction de commande n'est transmise à une unité de commande électronique (8) réglant le moteur d'entraînement (3) que lorsqu'une vitesse n'est pas engagée et que le frein d'arrêt est engagé.

10. Procédé de réglage d'une vitesse de rotation d'un entraînement hydrostatique selon la revendication 9,
**caractérisé en ce que**
la vitesse de rotation de sortie et la direction de rotation de sortie sont transmises par la console d'opérateur (11a, 11b) à une première et à une seconde unités de commande électronique (2, 8) et la seconde unité de commande électronique (8) détermine la vitesse de rotation pour le moteur d'entraînement (3).

11. Procédé de réglage d'une vitesse de rotation d'un entraînement hydrostatique selon la revendication 9,
**caractérisé en ce que**
la vitesse de rotation de sortie et la direction de rotation de sortie sont transmises par une console d'opérateur (11a, 11b) à la première unité de commande (2), qui détermine une vitesse de rotation pour le moteur d'entraînement (3) et la transmet ensuite à la seconde unité de commande électronique (8).

12. Procédé de réglage d'une vitesse de rotation d'un entraînement hydrostatique selon l'une quelconque des revendications 9 à 11,
**caractérisé en ce que**
la vitesse de rotation effective du moteur d'entraînement (3) est comparée à la vitesse de rotation déterminée pour le moteur d'entraînement (3) et en présence d'un écart, une nouvelle vitesse de rotation est déterminée et réglée, qui est adaptée à la puissance fournie du moteur d'entraînement (3) et à la puissance reçue de l'entraînement hydrostatique (4).

13. Procédé de réglage d'une vitesse de rotation d'un entraînement hydrostatique selon l'une quelconque des revendications 9 à 12,
**caractérisé en ce que**
lorsque le moteur d'entraînement (3) est arrêté et qu'une vitesse de rotation différente de zéro pour l'entraînement hydrostatique (4) est entrée, le moteur d'entraînement (3) est démarré automatiquement.

14. Procédé de réglage d'une vitesse de rotation d'un entraînement hydrostatique selon l'une quelconque des revendications 9 à 13,
**caractérisé en ce que**
lorsque le moteur d'entraînement (3) est en marche et que la valeur zéro pour l'entraînement hydrostatique (4) est entrée comme vitesse de rotation, le moteur d'entraînement (3) est automatiquement arrêté, à condition que le moteur d'entraînement ne soit pas utilisé simultanément pour la conduite.

15. Procédé de réglage d'une vitesse de rotation d'un entraînement hydrostatique selon l'une quelconque des revendications 9 à 14,
**caractérisé en ce que**
lorsque le moteur d'entraînement (3) est utilisé simultanément pour la conduite, la puissance reçue par l'entraînement hydrostatique (4) est limitée à la puissance du moteur d'entraînement (3) non exigée par la conduite.

16. Procédé de réglage d'une vitesse de rotation d'un entraînement hydrostatique selon l'une quelconque des revendications 9 à 15,
**caractérisé en ce que**
le réglage de la vitesse de rotation du moteur d'entraînement (3), lorsque le moteur d'entraînement (3) est utilisé simultanément pour la conduite, est interrompu.
